(19) Europäisches Patentamt
European Patent Office
Office européen des brevets

(11) EP 4 772 554 A1

(12) **EUROPEAN PATENT APPLICATION**
published in accordance with Art. 153(4) EPC

(43) Date of publication:
**08.07.2026 Bulletin 2026/28**

(21) Application number: **24859785.8**

(22) Date of filing: **27.08.2024**

(51) International Patent Classification (IPC):
***C08F 292/00*** *(2006.01)* ***C08F 2/44*** *(2006.01)*

(52) Cooperative Patent Classification (CPC):
**C08F 2/44; C08F 4/00; C08F 20/12; C08F 292/00; C08L 51/10; C08L 101/00**

(86) International application number:
**PCT/JP2024/030536**

(87) International publication number:
**WO 2025/047753 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.08.2023 JP 2023140261**

(71) Applicant: **Kao Corporation**
**Chuo-ku,**
**Tokyo 103-8210 (JP)**

(72) Inventors:
- **KOZUKA, Hiroto**
  **Chuo-ku, Tokyo 103-8210 (JP)**
- **ODA, Yoshiro**
  **Chuo-ku, Tokyo 103-8210 (JP)**

(74) Representative: **Hoffmann Eitle**
**Patent- und Rechtsanwälte PartmbB**
**Arabellastraße 30**
**81925 München (DE)**

# (54) METHOD FOR PRODUCING COMPOSITE PARTICLES

(57) The present invention relates to a method for producing a composite particle having a polymer graft chain including; (Step 1) reacting an inorganic particle with a silane compound having a polymerization initiation group other than a halosulfonyl group to bind the polymerization initiation group to the inorganic particle, and (Step 2) subjecting a monomer to a graft polymerization in the presence of the inorganic particle bound with the polymerization initiation group, wherein Step 1 is carried out in a powder state. According to the present invention, a composite particle having a graft density equivalent to a conventional method using a solvent at the time of introducing a polymerization initiation group can be obtained, and a method for production having excellent handling property at the time of production is provided.

EP 4 772 554 A1

## Description

FIELD OF THE INVENTION

The present invention relates to a method for producing a composite particle.

BACKGROUND OF THE INVENTION

Conventionally, as a technology for bonding a polymer chain to an inorganic particle such as a metal particle, for example, a core particle mixed with a coupling agent having a polymerizable reactive group, and a composite particle in which the surface of the core particle is coated with a polymer layer by carrying out a radical polymerization in the presence of a monomer component and a polymerization initiation agent are known (Patent Publication 1). It is known that various functions such as vibration-damping properties and antibacterial properties can be given to a particle by bonding an inorganic particle with an organic polymer chain (Patent Publications 2 and 3).

However, there has been a problem that when composite particles described in Patent Publications 1 and 2 are produced, a large amount of solvents are used at the time of introducing a polymerization initiation group, and the processable amount of inorganic particles per unit volume becomes small, thereby not enhancing the production efficiency. In addition, there has also been a problem that a reduction of the amount of a solvent to be used made a highly viscous slurry, thereby making it difficult to handle.

On the other hand, when composite particles described in Patent Publication 3 are produced, a small amount of solvent is used at the time of introducing a polymerization initiation group and the solvent can be handled as a powder after introducing the polymerization initiation group, therefore it was thought that the above problems have been solved.

However, after studying the technique of Patent Publication 3, the present inventors have found that there is room for improvement, because the graft density of the polymer graft chain in the technique of Patent Publication 3 is unexpectedly low. There is an advantage that the higher the graft density of the polymer graft chain on the surface of composite particles is, the better the dispersibility of composite particles is, and more functional molecules can be introduced.

Patent Publication 1: Japanese Patent Laid-Open No. 2025-120365
Patent Publication 2: Japanese Patent Laid-Open No. 2020-196877
Patent Publication 3: Japanese Patent Laid-Open No. 2010-018535

SUMMARY OF THE INVENTION

The present invention relates to the following [1] to [11].

[1] A method for producing a composite particle having a polymer graft chain including;

(Step 1) reacting an inorganic particle with a silane compound having a polymerization initiation group other than a halosulfonyl group to bind the polymerization initiation group to the inorganic particle, and
(Step 2) subjecting a monomer to a graft polymerization in the presence of the inorganic particle bound with the polymerization initiation group,
wherein Step 1 is carried out in a powder state.

[2] The method for production according to the above [1], wherein a ratio of a total surface area of the inorganic particle (A [$m^2$]) to a total mass of a substance which is liquid at 25°C under 1 atm (B [g]) ( (A) / (B) [$m^2$ / g] ) is 20 or more, among the components used in Step 1.

[3] The method for production according to the above [1] or [2], wherein a ratio of a total mass of the inorganic particles (A' [g]) to a total mass of a substance which is liquid at 25°C under 1 atm (B [g]) ( (A') / (B) ) is 2 or more, among the components used in Step 1.

[4] The method for production according to any one of the above [1] to [3] including contacting the inorganic particle bound with the polymerization initiation group and the monomer, under a condition of a living radical polymerization.

[5] The method for production according to any one of the above [1] to [4], wherein a graft density of the polymer graft chain on the surface of the composite particle is 0.001 chains/$nm^2$ or more and 5 chains/$nm^2$ or less.

[6] The method for production according to any one of the above [1] to [5], wherein the used amount of the silane compound having a polymerization initiation group other than the halosulfonyl group is 0.1 parts by mass or more and 100 parts by mass or less, based on 100 parts by mass of the inorganic particle.

[7] The method for production according to any one of the above [1] to [6], wherein the polymerization initiation group is

a α-haloacyl group, a haloalkyl group or a haloalkyl phenyl group.
[8] The method for production according to any one of the above [1] to [7], further using one or more selected from the group consisting of ethanol, dichloromethane, toluene, acetone, tetrahydrofuran, methanol, butanol, and butyl cellosolve in Step 1.
[9] The method for production according to any one of the above [1] to [8], further using a catalyst in Step 1.
[10] A method for producing a resin composition including mixing a composite particle obtained by a method for production as defined in any one of the above [1] to [9] and a resin.
[11] A resin composition containing

a composite particle, and
a resin,

wherein the composite particle is obtained by a method for producing the composite particle having a polymer graft chain including;

(Step 1) reacting an inorganic particle with a silane compound having a polymerization initiation group other than a halosulfonyl group to bind the polymerization initiation group to the inorganic particle, and
(Step 2) subjecting a monomer to a graft polymerization in the presence of the inorganic particle bound with the polymerization initiation group,

wherein Step 1 is carried out in a powder state.

DETAILED DESCRIPTION OF THE INVENTION

The present invention relates to a provision of a method for production which obtains a composite particle having a graft density equivalent to a conventional method using a solvent at the time of introducing a polymerization initiation group, and has an excellent handling property at the time of production.
According to the present invention, a method for production which obtains a composite particle having a graft density equivalent to or greater than a conventional method using a solvent at the time of introducing a polymerization initiation group, and has an excellent handling property at the time of production can be provided.
The present inventors have focused on the kind of a silane coupling agent when introducing a polymerization initiation group to an inorganic particle. The present inventors presumed that since a compound having a halosulfonyl group which is a silane coupling agent used in Patent Publication 1 tends to generate a radical with high frequency, a graft polymerization proceeds too fast, consequently decreasing a graft density. Consequently, as a result of studying various silane coupling agents other than compounds having a halosulfonyl group, the present inventors could not only improve the handling property at the time of production but also unexpectedly increase the graft density by reducing the amount of liquid components such as a solvent as much as possible, when introducing a polymerization initiation group to an inorganic particle using the silane coupling agent.

< Method for Producing Composite Particle Having Polymer Graft Chain >

The method for producing a composite particle having a polymer graft chain of the present invention is a method for producing a composite particle having a polymer graft chain including;

(Step 1) reacting an inorganic particle with a silane compound having a polymerization initiation group other than a halosulfonyl group to bind the polymerization initiation group to the inorganic particle, and
(Step 2) subjecting a monomer to a graft polymerization in the presence of the inorganic particle bound with the polymerization initiation group,

wherein Step 1 is carried out in a powder state.
In the present invention, "powder" refers to a collection of particles, in which a liquid phase cannot be visually confirmed, a caking is not occurred, and fluidity is found.
The fluidity means that both of the following two points are fulfilled;

- powder passes through a funnel (the diameter of the lower opening is 5 mm) freely, and
- angle of repose is measurable.

In the present invention, the angle of repose of powder or particle can be measured using a Powder Tester "PT-R"

manufactured by Hosokawa Micron Corporation.

In the present invention, the angle of repose of particle immediately after the termination of Step 1 is preferably within the scope of 25 degrees or more and 65 degrees or less. Thus, for example, if the angle of repose of particle immediately after the termination of Step 1 is within the scope of 25 degrees or more and 65 degrees or less, it can be said that Step 1 is carried out in a powder state.

Incidentally, "liquid" as used herein indicates a state having a fluidity in which a volume change is sufficiently small to a pressure change, and a viscosity at 25°C under 1 atm is preferably 10,000 mPa · s or less, more preferably 8,000 mPa · s or less, and even more preferably 4,000 mPa · s or less. The above viscosity is a value which is measured at a given rotation speed and at a temperature of 25°C for 1 minute with a B-type viscometer using a rotor according to a measurement applicable range.

[Composite Particle]

The composite particle as used herein is a particle in which a polymer graft chain is bound on the surface of an inorganic particle.

[Inorganic Particle]

The inorganic particle includes metal particles such as metal oxides, metal oxide salts, metal hydroxides, metal carbonates, and particles other than metal. For example, the inorganic particle is one or more selected from a group consisting of silica, alumina, titania, zirconia, ferrite, magnesia, silica-titania, silicon carbide, silicon nitride, activated carbon, carbon black, carbon nanofibers, carbon nanotubes, calcium carbonate, calcium oxide, barium sulfate, diatomite, bentonite, perlite, mica, and talc, more preferably one or more selected from a group consisting of silicon oxides such as silica, and silicates such as mica and talc, and even more preferably silica.

The amount of hydroxy group, amino group and the like on the surface of the inorganic particle may be increased by processing the surface of the inorganic particle by a known method, from the viewpoint of enhancing the reaction rate with a silane compound having a polymerization initiation group other than a halosulfonyl group.

The form of a particle includes, but not particularly limited to, a board form, a grain form, a needle form, a fiber form and the like. When merely described as "particle" in the present specification, the particle refers to a particle used for a production of a composite particle.

The size of the inorganic particle is not particularly limited, and from the viewpoint of increasing the graft density of the polymer graft chain on the surface of a composite particle, an average particle size is preferably 1 nm or more, more preferably 3 nm or more, even more preferably 10 nm or more, even more preferably 50 nm or more, and even more preferably 100 nm or more, and on the other hand, the average particle size is preferably 100 μm or less, more preferably 10 μm or less, even more preferably 1 μm or less, even more preferably 500 nm or less, and even more preferably 300 nm or less.

The size of the inorganic particle is a value measured using Multisizer 3 (using a 20 μm aperture-tube manufactured by Beckman Coulter, Inc.) by a Coulter counter method.

[Polymer Graft Chain]

Polymer graft chain includes a homopolymer or a copolymer such as a styrenic monomer, a nitrile-based monomer, a (meth)acrylic monomer, an unsaturated olefin, and a conjugated diene monomer. The polymer graft chain is preferably a homopolymer or a copolymer of one or more selected from a group consisting of acrylic acid, methacrylic acid and derivatives thereof, more preferably a homopolymer or a copolymer of one or more selected from methacrylic acid and derivatives thereof, and even more preferably polybutyl methacrylate.

The graft density of the polymer graft chain on the surface of a composite particle is preferably 0.001 chains/$nm^2$ or more, more preferably 0.01 chains/$nm^2$ or more, and even more preferably 0.1 chains/$nm^2$ or more, from the viewpoint of exhibiting function. On the other hand, the graft density is preferably 5 chains/$nm^2$ or less, more preferably 3 chains/$nm^2$ or less, even more preferably 2 chains/$nm^2$ or less, and even more preferably 1 chain/$nm^2$ or less, from the viewpoint of easiness of grafting of the polymer chain. The graft density is measured by a method described in Examples mentioned later.

The number average molecular weight of the polymer graft chain in the composite particle is preferably 5,000 or more, more preferably 10,000 or more, and even more preferably 15,000 or more, from the viewpoint of controlling the film thickness of the polymer graft chain. In addition, the number average molecular weight is preferably 1,000,000 or less, more preferably 500,000 or less, and even more preferably 200,000 or less, from the same viewpoint.

The number average molecular weight of the polymer graft chain is measured by a method described in Examples mentioned later.

The glass transition temperature (Tg) of the polymer graft chain in the composite particle is preferably -30°C or more, more preferably - 10°C or more, and even more preferably 10°C or more, from the viewpoint of exhibiting function, and the glass transition temperature is preferably 80°C or less, more preferably 50°C or less, and even more preferably 40°C or less, from the same viewpoint.

The glass transition temperature (Tg) of the polymer graft chain in the composite particle can be controlled by a monomer used in the production of the composite particle or molecular weight and molecular weight distribution.

The glass transition temperature (Tg) is measured by a method described in Examples mentioned later.

The film thickness of the polymer graft chain in the composite particle is preferably 1 nm or more, more preferably 3 nm or more, and even more preferably 5 nm or more, from the viewpoint of exhibiting function, and the film thickness is preferably 1 μm or less, more preferably 100 nm or less, and even more preferably 40 nm or less, from the same viewpoint.

The film thickness of the polymer graft chain is calculated by a method described in Examples mentioned later.

[Silane Compound Having Polymerization Initiation Group Other Than Halosulfonyl Group]

In the present invention, "a polymerization initiation group other than a halosulfonyl group" includes α-haloacyl group, haloalkyl group, or haloalkylphenyl group.

A concrete example of α-haloacyl group includes α-bromoacyl group and α-chloroacyl group, and the number of carbon atoms of alkyl group constituting a haloacyl group is preferably from 3 to 11.

A concrete example of haloalkyl group includes bromoalkyl group and chloroalkyl group, and the number of carbon atoms of alkyl group constituting a haloalkyl group is preferably from 3 to 11.

A concrete example of haloalkylphenyl group includes bromoalkylphenyl group and chloroalkylphenyl group, and the number of carbon atoms of alkyl group constituting a haloalkylphenyl group is preferably from 3 to 11.

"A polymerization initiation group other than a halosulfonyl group" is preferably α-bromoacyl group, from the viewpoint that the graft density can be enhanced by introducing the polymerization initiation group to the surface of the inorganic particle.

A silane compound having a polymerization initiation group other than a halosulfonyl group can be synthesized by reacting "a silane compound" and "a compound having a polymerization initiation group" by a known method.

For example, a silane compound having a bromoacyl group which is a polymerization initiation group (APTMS-Br) can be synthesized by reacting a 3-aminopropyltrimethoxysilane and a 2-bromoisobutyl bromide, as described in Synthetic Example 1 mentioned later.

The above mentioned silane compound which can be used in the present invention includes 3-aminopropyltriethoxysilane, 3-(2-aminoethylamino)propyltrimethoxysilane, 3-(2-aminoethylamino)propyldimethoxysilane, 3-aminopropyldimethoxymethylsilane, [3-(6-aminohexylamino)propyl]trimethoxysilane, 3-aminopropyldiethoxymethylsilane, 3-(2-aminoethylamino)propyltriethoxysilane, trimethoxysilane, dimethoxy(methyl)silane, diethoxymethylsilane, triethoxysilane, tris(trimethylsilyloxy)silane and the like, other than 3-aminopropyltrimethoxysilane.

A compound having the above mentioned polymerization initiation group which can be used in the present invention includes 2-chloroisobutyl chloride, 2-bromopropionyl bromide, 2-chloropropionyl chloride, 2-bromo-2-phenylacetyl bromide, 2-chloro-2-phenylacetyl chloride, allyl 2-bromo-2-methylpropionate, 5-hexenyl 2-bromo-2-methylpropionate, 10-undecenyl 2-bromoisobutyrate and the like, other than 2-bromoisobutyl bromide.

As a silane compound having a polymerization initiation group other than a halosulfonyl group, a product which is commercially available as a silane coupling agent in the field of the present invention can be used, which includes, for example, 3-(trimethoxysilyl)propyl 2-bromo-2-methylpropanoate and the like.

[Method for Producing Composite Particle]

A composite particle can be obtained by binding a polymer graft chain to a particle surface.

The method for binding a polymer graft chain to a particle surface is not particularly limited, as long as the method can carry out a grafting of a polymer chain, and a Grafting from method which polymerizes a polymer graft chain from a polymerization initiation site of a particle surface is preferred.

A polymerization method includes, but not particularly limited to, a radical polymerization, an anionic polymerization, a cationic polymerization and the like. Among them, a living radical polymerization, a living anionic polymerization, and a living cationic polymerization are preferred from the viewpoint of easiness of controlling molecular weight and molecular weight distribution of a polymer chain and from the viewpoint of easiness of grafting various copolymers, and a living radical polymerization is more preferred from the viewpoint of applicability to a wide range of monomers.

A living radical polymerization method includes Atom Transfer Radical Polymerization (ATRP), Reversible Addition-Fragmentation Chain Transfer Polymerization (RAFT), Nitroxide-Mediated Living Radical Polymerization (NMP), and Atom Transfer Radical Polymerization (ATRP) is preferred from the same viewpoint.

More concretely, a production embodiment including the following Step 1 and Step 2 is exemplified as a method for producing a composite particle.

[Step 1]

Step 1 is a step of reacting an inorganic particle with a silane compound having a polymerization initiation group other than a halosulfonyl group to bind the polymerization initiation group to the inorganic particle. Specifically, an inorganic particle, a silane compound having a polymerization initiation group other than a halosulfonyl group, and optionally a catalyst, a solvent and the like are added and mixed. More suitably, an inorganic particle, a mixture of an inorganic particle and a catalyst when a catalyst is used, a silane compound having a polymerization initiation group other than a halosulfonyl group, and optionally a solvent are added and mixed evenly.

The reaction temperature at the time of reaction of the silane compound and the inorganic particle is preferably from 25°C to 250°C, more preferably 150°C or less, and even more preferably 120°C or less.

The amount of use of a silane compound having a polymerization initiation group other than a halosulfonyl group is preferably 0.1 parts by mass or more, more preferably 0.5 parts by mass or more, and even more preferably 1.0 parts by mass or more, based on 100 parts by mass of the inorganic particle, from the viewpoint of surface modification efficiency of the inorganic particle. On the other hand, the amount of use is preferably 100 parts by mass or less, more preferably 50 parts by mass or less, and even more preferably 40 parts by mass or less, from the viewpoint of inhibiting reactions between silane compounds.

As to the reaction of the silane compound and the inorganic particle, Step 1 is preferably carried out in a powder state. Consequently, the amount of the inorganic particle which can be produced per unit volume can be increased, and the production efficiency is enhanced. In order to carry out Step 1 in a powder state, for example, Step 1 may be carried out using as small amount as possible of a substance which is liquid at 25°C under 1 atm such as a solvent.

In the present invention, "carry out using as small amount as possible of a substance which is liquid at 25°C under 1 atm" means carrying out the step in the ratio of the total surface area of the inorganic particle (A [$m^2$]) to the total mass of the substance which is liquid at 25°C under 1 atm (B [g]) ( (A) / (B) [$m^2$ / g] ) is 20 or more, among the components used in Step 1.

Here, (A) / (B) [$m^2$ / g] is 20 or more, preferably 45 or more, more preferably 50 or more, and even more preferably 70 or more, from the viewpoint of carrying out Step 1 in a powder state and from the viewpoint of improving the graft density of a polymer graft chain on the surface of the composite particle. On the other hand, (A) / (B) [$m^2$ / g] is preferably 1,000 or less, more preferably 800 or less, even more preferably 700 or less, and even more preferably 500 or less, form the viewpoint of surface modification efficiency of the inorganic particle.

The total surface area of the inorganic particle can be obtained by a method described in Examples mentioned later.

A substance which is liquid at 25°C under 1 atm among the component used in Step 1 includes a substance which is liquid at 25°C under 1 atm and a silane compound having a polymerization initiation group other than a halosulfonyl group among solvents and catalysts used in the field of the present invention.

A solvent which can be used in Step 1 includes a solvent containing an organic solvent and/or water, and more specifically water, in addition to an organic solvent such as ethanol, dichloromethane, toluene, acetone, tetrahydrofuran, butanol, and butyl cellosolve. Among them, a solvent containing an organic solvent is preferred from the viewpoint of improving the dispersibility of a silane coupling agent with the inorganic particle and improving the graft density of a polymer graft chain on the surface of the composite particle. Specifically, a solvent containing ethanol, toluene, tetrahydrofuran, or methanol is preferred, a solvent containing ethanol, toluene, or tetrahydrofuran is more preferred, and a solvent containing ethanol is even more preferred.

A content mass ratio of an organic solvent to a silane coupling agent is preferably 0.1 or more, more preferably 0.5 or more, even more preferably 1 or more, and even more preferably 2 or more, and the content mass ratio is preferably 10 or less, more preferably 8 or less, and even more preferably 4 or less based on 1 of silane coupling agent, from the viewpoint of carrying out Step 1 in a powder state and from the viewpoint of improving the graft density of a polymer graft chain on the surface of the composite particle.

In addition, a solvent in Step 1 preferably contains water, from the viewpoint of improving the reactivity of a silane coupling agent with an inorganic particle and improving the graft density of a polymer graft chain on the surface of the composite particle.

A content mass ratio of water to a silane coupling agent is preferably 0.01 or more, more preferably 0.05 or more, even more preferably 0.1 or more, and even more preferably 0.2 or more, and a content mass ratio is preferably 1 or less, more preferably 0.5 or less, and even more preferably 0.3 or less based on 1 of silane coupling agent, from the viewpoint of carrying out Step 1 in a powder state and from the viewpoint of improving the graft density of a polymer graft chain on the surface of the composite particle.

In a case where an organic solvent and water are used in combination, a content mass ratio of alcohol and water to a silane coupling agent is preferably 11 or less, more preferably 8.5 or less, and even more preferably 4.3 or less based on 1 of silane coupling agent, from the viewpoint of carrying out Step 1 in a powder state.

A catalyst which can be used in Step 1 includes an acid (for example, acetic acid, trifluoroacetic acid and the like),

a base (for example, ammonia, triethylamine, diethylamine and the like), a transition metal (for example, Ti, Ni, Sn and the like), or a metal containing a transition metal and the like. Among them, a base is preferred, a secondary amine and/or a tertiary amine is more preferred, and a tertiary amine is even more preferred, from the viewpoint of excellent dispersibility with an inorganic particle and improving the graft density of a polymer graft chain on the surface of the composite particle.

A secondary amine is an amine in which two hydrogen atoms of ammonia are substituted to a hydrocarbon group, and includes preferably dipropylamine, diisopropylamine, dibutylamine and the like in the present invention. A tertiary amine is an amine in which all hydrogen atoms of ammonia are substituted to a hydrocarbon group, and includes preferably diethylmethylamine, triethylamine, ethyldiisopropylamine, tripropylamine, tributylamine and the like.

A catalyst may or may not be used in Step 1. As a blended amount of a catalyst, in a case where a solvent is used, the amount usually used in the field of the present invention can be applied, and the blended amount is preferably 0.1 mol or more, more preferably 0.5 mol or more, and even more preferably 1 mol or more, based on 1 $nm^2$ of a surface area of an inorganic particle, from the viewpoint of surface modification efficiency of the inorganic particle. On the other hand, the blended amount is preferably 1000 mol or less, more preferably 100 mol or less, and even more preferably 10 mol or less, from the viewpoint of inhibiting reactions between silane compounds.

Further, among the components used in Step 1, the ratio of the total mass of the inorganic particle (A' [g]) to the total mass of the substance which is liquid at 25°C under 1 atm (B [g]) ( (A') / (B) ) is preferably 2 or more, more preferably 3 or more, even more preferably 5 or more, and even more preferably 10 or more, from the viewpoint of improving the graft density of the polymer graft chain on the surface of the composite particle. On the other hand, (A') / (B) is preferably 100 or less, more preferably 80 or less, and even more preferably 60 or less, from the viewpoint of surface modification efficiency of the inorganic particle.

Furthermore, regarding the relationship between the total surface area of the inorganic particle (A [$m^2$]) and (A') / (B), it is more preferable that the value of (A') / (B) is withing the aforementioned range, and further satisfies $\log(A) \geq -6.2 \log((A') / (B)) + 2.35$, from the viewpoint of carrying out Step 1 in a powder state.

An inorganic particle of which to the surface a polymerization initiation group other than a halosulfonyl group is bound can be obtained by removing unreacted components after the reaction of the silane compound and inorganic particles.

[Step 2]

In step 2, a monomer is subjected to a graft polymerization in the presence of an inorganic particle bound with the polymerization initiation group. Step 2 can be preferably carried out under a known condition in a living radical polymerization. The "under a condition of a living radical polymerization" as used herein means to adopt a polymerization condition which one of ordinary skill in the art suitably selects to securely and preferably proceed a living radical polymerization initiated from a polymerization initiation group formed on the surface of the inorganic particle bound with a polymerization initiation group.

A monomer used in Step 2 includes styrenic monomers, nitrile-based monomers, (meth)acrylic monomers, unsaturated olefins, conjugated diene monomers and the like, and monomers having particular functional groups on the side chain can be used.

Specifically, the monomer includes butyl methacrylate, butyl acrylate, ethyl methacrylate, ethyl acrylate, methyl methacrylate, methyl acrylate, acrylamide, acrylonitrile, 4-benzoylphenyl acrylate, benzyl methacrylate, cyclohexyl methacrylate, N,N-dimethylmethacrylamide, dodecyl acrylate, dodecyl methacrylate, 2-ethylhexyl acrylate, 2-ethylhexyl methacrylate, glycidyl methacrylate, n-hexyl methacrylate, methacrylamide, methacrylic acid, acrylic acid, octadecyl acrylate, phenyl acrylate, propyl methacrylate, vinyl acetate, methoxy poly(ethylene glycol) acrylate, methoxy poly(alkylene glycol) methacrylate, styrene, p-bromostyrene, 4-tert-butylstyrene, p-chlorostyrene, 4-iodostyrene, p-methoxystyrene, p-methylstyrene, sodium p-styrenesulfonate, vinylbenzyl chloride, and the like.

As the amount of use of a monomer in Step 2, a monomer is preferably 0.00001 mol or more, more preferably 0.0001 mol or more, and even more preferably 0.001 mol or more, based on the surface area 1 $m^2$ of the inorganic particle bound with a polymerization initiation group, from the viewpoint of introduction efficiency of a polymer. On the other hand, a monomer is preferably 10 mol or less, more preferably 1 mol or less, and even more preferably 0.1 mol or less, based on the specific surface area of the inorganic particle bound with a polymerization initiation group, from the viewpoint of controlling a polymerization.

A graft polymerization is carried out using a copper halide such as a copper bromide or a copper chloride as a catalyst.

The ligand complexes for the copper halide includes, not particularly limited, for example, tris(2-(dimethylamino)ethyl)amine, N,N,N',N''-pentamethyldiethylenetriamine, 1,1,4,7,10,10-hexamethyltriethylenetetramine, 1,4,8,11-tetramethyl-1,4,8,11-azacyclotetradecane, bipyridine and the like.

The amount of the copper halide as a catalyst is generally from 0.1 to 1.0 parts by mass based on 100 parts by mass of a monomer.

A solvent used during polymerization is not particularly limited as long as it can dissolve a monomer. For example, the solvent includes anisole, toluene, tetrahydrofuran, acetonitrile, methanol, 2-propanol, hexane, octane, dodecane, 2,2,2-trifluoroethanol, and the like.

A reaction temperature is generally from 30 to 200°C and preferably from 50 to 150°C.

After a graft polymerization, it is preferable to remove unreacted monomers or free polymers which were not bound to an inorganic particle by a known method.

< Resin Composition and Method for Producing Resin Composition >

A resin composition of the present invention contains a composite particle obtained by the above method for production and a resin.

[Resin]

As a resin, a thermoplastic resin is preferred from the viewpoint of processability, and a thermosetting resin is preferred from the viewpoint of heat resistance.

A thermoplastic resin includes a polyolefin resin, a polyester resin, a polyamide resin, an ABS resin, a polystyrene resin, a polycarbonate resin, a polyvinyl chloride resin, an acrylic resin and the like. Among them, one or more selected from a group consisting of a polyolefin resin, a polyamide resin, and an ABS resin are preferred, one or more selected from a group consisting of polyolefin resins are more preferred, and a polypropylene resin is even more preferred, from the viewpoint of easiness of handling of the obtained resin composition such as moldability.

The weight-average molecular weight of a thermoplastic resin is not particularly limited, and a thermoplastic resin having a molecular weight of from 5000 to 500000 can be used.

A thermosetting resin includes a polyurethane resin, an urea resin, a phenolic resin foam, an unsaturated polyester resin, an alkyd resin, a melamine resin, an epoxy resin, a silicone resin, and a modified polyphenylene ether resin. Among them, a modified polyphenylene ether resin is preferred from the viewpoint of exhibition of excellent low dielectric properties. Specific example of a modified polyphenylene ether resin includes, for example, a resin obtained by using a modified polyphenylene ether compound described in WO 2019/065941 and a crosslinking curing agent having carbon-carbon unsaturated double bonds in the molecule.

The mass average molecular weight of a thermosetting resin is not particularly limited, and a thermoplastic resin having a molecular weight of from 100 to 500000 can be used.

The amount of resin in the resin composition of the present invention is preferably 30% by mass or more, more preferably 40% by mass or more, and even more preferably 50% by mass or more, from the viewpoint of moldability. On the other hand, the amount of resin is preferably 95% by mass or less, more preferably 80% by mass or less, and even more preferably 75% by mass or less, from the viewpoint of exhibiting function. In a case where two or more resins are formulated, the formulation amount is a total amount of each resin.

The amount of a composite particle in the resin composition of the present invention is preferably 1% by mass or more, more preferably 10% by mass or more, even more preferably 20% by mass or more, and even more preferably 25% by mass or more, from the viewpoint of exhibiting function. On the other hand, the amount of the composite particle is preferably 75% by mass or less, more preferably 60% by mass or less, even more preferably 55% by mass or less, and even more preferably 50% by mass or less, from the viewpoint of dispersibility of the composite particle in a resin. In a case where two or more inorganic particles are contained, the content is a total amount of each composite particle.

In a resin composition of the present invention, chain extenders, plasticizers, organic and inorganic crystal nucleating agents, hydrolysis inhibitors, flame retardants, antioxidants, hydrocarbon-based waxes, anionic surfactant-based lubricants, UV absorbers, antistatic agents, anti-clouding agents, light stabilizers, pigments, mildew-proofing agents, antibacterial agents, foaming agents, and other polymeric materials can be formulated as a component other than the ones mentioned above.

[Method for Producing Resin Composition]

Such resin composition of the present invention can be produced by a method for production including mixing a composite particle obtained by the method for production mentioned above and a resin.

For example, a method for production including melt-kneading a resin and a composite particle is included. For melt-kneading, a known kneader such as a tightly closed-type kneader, a single-screw or twinscrew extruder, and an open-roller kneader can be used. After melt-kneading, a melt-kneaded product may be dried or cooled according to a known method. In addition, a raw material can be evenly mixed beforehand using a Henschel mixer, a super mixer or the like, and then subjected to a melt-kneading. The melt-kneading temperature and melt-kneading time are not uniformly defined depending on the kinds of raw materials used, and are preferably from 170 to 240°C and from 15 to 900 seconds.

With regard to the embodiment mentioned above, the present invention further discloses the following method for producing an composite particle, a method for producing a resin composition, and a resin composition.

[1] A method for producing a composite particle having a polymer graft chain including;

(Step 1) reacting an inorganic particle with a silane compound having a polymerization initiation group other than a halosulfonyl group to bind the polymerization initiation group to the inorganic particle, and
(Step 2) subjecting a monomer to a graft polymerization in the presence of the inorganic particle bound with the polymerization initiation group,

wherein Step 1 is carried out in a powder state.
[2] The method for production according to [1], wherein the above powder is a collection of particles, in which a liquid phase cannot be visually confirmed, a caking is not occurred, and fluidity is found.
[3] The method for production according to [1] or [2], wherein the above fluidity means free passage through a funnel (the diameter of the lower opening is 5mm) and has an angle of repose of 25 degrees or more and 65 degrees or less.
[4] The method for production according to any one of [1] to [3], wherein the ratio of the total surface area of the inorganic particle (A [$m^2$]) to the total mass of the substance which is liquid at 25°C under 1 atm (B [g]) ( (A) / (B) [$m^2$ / g] ) is 20 or more and 1,000 or less, among the components used in Step 1.
[5] The method for production according to any one of [1] to [4], wherein the above (A) / (B) [$m^2$ / g] is 45 or more and 1,000 or less.
[6] The method for production according to any one of [1] to [5], wherein the above (A) / (B) [$m^2$ / g] is 50 or more and 700 or less.
[7] The method for production according to any one of [1] to [6], wherein the above (A) / (B) [$m^2$ / g] is 70 or more and 500 or less.
[8] The method for production according to any one of [1] to [7], wherein the ratio of the total mass of the inorganic particle (A' [g]) to the total mass of the substance which is liquid at 25°C under 1 atm (B [g])
( (A') / (B) ) is 2 or more and 100 or less, among the components used in Step 1.
[9] The method for production according to any one of [1] to [8], wherein the above (A') / (B) is 3 or more and 60 or less.
[10] The method for production according to any one of [1] to [9], wherein the above (A), (B), and (A') satisfy the following formula: $\log(A) \geq -6.2 \log((A') / (B)) + 2.35$.
[11] The method for production according to any one of [1] to [10], wherein the size of the above inorganic particle is 1 nm or more and 100 μm or less as an average particle size.
[12] The method for production according to any one of [1] to [11], wherein the size of the above inorganic particle is 3 nm or more and 10 μm or less as an average particle size.
[13] The method for production according to any one of [1] to [12], wherein the size of the above inorganic particle is 50 nm or more and l μm or less as an average particle size.
[14] The method for production according to any one of [1] to [13], wherein the size of the above inorganic particle is 100 nm or more and 500 nm or less as an average particle size.
[15] The method for production according to any one of [1] to [14], further using a catalyst in Step 1.
[16] The method for production according to [15], wherein the above catalyst is a triethylamine, and the added amount of triethylamine is 0.1 mol or more and 1000 mol or less, based on the surface area 1 $nm^2$ of the inorganic particle.
[17] The method for production according to any one of [1] to [16], further using an organic solvent and/or a solvent containing water in Step 1.
[18] The method for production according to [17], wherein the above organic solvent contains one or more selected from ethanol, dichloromethane, toluene, acetone, tetrahydrofuran, methanol, butanol, and butyl cellosolve, preferably contains one or more selected from ethanol, toluene, tetrahydrofuran, and methanol, more preferably contains one or more selected from ethanol, toluene, and tetrahydrofuran, and even more preferably contains ethanol.
[19] The method for production according to [17] or [18], wherein a content mass ratio of the above organic solvent to a silane coupling agent is 0.1 or more and 10 or less, preferably 0.5 or more and 8 or less, more preferably 1 or more and 4 or less, and even more preferably 2 or more and 4 or less.
[20] The method for production according to [17], wherein the above organic solvent is ethanol, and the content mass ratio of ethanol to a silane coupling agent is 0.1 or more and 10 or less, and preferably 2 or more and 4 or less, based on 1 of silane coupling agent.
[21] The method for production according to any one of [17] to [20], wherein a content mass ratio of water to a silane coupling agent is 0.01 or more and 1 or less, preferably 0.05 or more and 0.5 or less, more preferably 0.1 or more and 0.3 or less, and even more preferably 0.2 or more and 0.3 or less.
[22] The method for production according to any one of [17] to [21], wherein a content mass ratio of alcohol and water to a silane coupling agent is 11 or less, preferably 8.5 or less, and more preferably 4.3 or less, in a case where an organic

solvent alcohol and water are used in combination.
[23] The method for production according to any one of [1] to [22], wherein the amount used of a silane compound having a polymerization initiation group other than a halosulfonyl group is 0.1 parts by mass or more and 100 parts by mass or less, preferably 0.5 parts by mass or more and 50 parts by mass or less, and more preferably 1.0 parts by mass or more and 40 parts by mass or less, based on 100 parts by mass of the inorganic particle.
[24] The method for production according to any one of [1] to [23] including contacting the inorganic particle bound with the polymerization initiation group and the monomer, under a condition of a living radical polymerization.
[25] The method for production according to any one of [1] to [24], wherein a graft density of the polymer graft chain on the surface of the composite particle is 0.001 chains/$nm^2$ or more and 5 chains/$nm^2$ or less, preferably 0.01 chains/$nm^2$ or more and 3 chains/$nm^2$ or less, more preferably 0.1 chains/$nm^2$ or more and 2 chains/$nm^2$ or less, and even more preferably 0.1 chains/$nm^2$ or more and 1 chain/$nm^2$ or less.
[26] A method for producing a resin composition including mixing the composite particle obtained by the method for production as defined in any one of [1] to [25].
[27] The method for production according to [26], wherein the resin is a thermoplastic resin.
[28] The method for production according to [27], wherein the thermoplastic resin is one or more selected from a polyolefin resin, a polyester resin, a polyamide resin, an ABS resin, a polystyrene resin, a polycarbonate resin, a vinyl chloride resin, and an acrylic resin.
[29] The method for production according to [27] or [28], wherein the thermoplastic resin is a polypropylene resin having the mass average molecular weight of 5,000 or more and 500,000 or less.
[30] The method for production according to [26], wherein the resin is a thermosetting resin.
[31] The method for production according to [30], wherein the thermosetting resin is one or more selected from a polyurethane resin, an urea resin, a phenolic resin foam, an unsaturated polyester resin, an alkyd resin, a melamine resin, an epoxy resin, a silicone resin, and a modified polyphenylene ether resin.
[32] The method for production according to [30], wherein the thermosetting resin is a modified polyphenylene ether resin.
[33] A resin composition containing

a composite particle, and
a resin,

wherein the composite particle is obtained by a method for producing the composite particle having a polymer graft chain including;

(Step 1) reacting an inorganic particle with a silane compound having a polymerization initiation group other than a halosulfonyl group to bind the polymerization initiation group to the inorganic particle, and
(Step 2) subjecting a monomer to a graft polymerization in the presence of the inorganic particle bound with the polymerization initiation group,

wherein Step 1 is carried out in a powder state.

[34] A resin composition containing a composite particle and a resin, wherein the composite particle is obtained by a method for producing a composite particle having a polymer graft chain, including Step 1 of reacting an inorganic particle with a silane compound having a polymerization initiation group other than a halosulfonyl group to bind the polymerization initiation group to the inorganic particle, and Step 2 of subjecting a monomer to a graft polymerization in the presence of the inorganic particle bound with the polymerization initiation group, and
wherein the ratio of the total surface area of the inorganic particle (A [$m^2$]) to the total mass of the substance which is liquid at 25°C under 1 atm (B [g]) ( (A) / (B) [$m^2$ / g] ) is 20 or more, among the components used in Step 1.
[35] The composite particle having a polymer graft chain obtained by a method for production including Step 1 of reacting an inorganic particle with a silane compound having a polymerization initiation group other than a halosulfonyl group to bind the polymerization initiation group to the inorganic particle, and Step 2 of subjecting a monomer to a graft polymerization in the presence of the inorganic particle bound with the polymerization initiation group, and the composite particle is obtained by a method for production in which Step 1 is carried out in a powder state.
[36] A resin composition containing the composite particle as defined in the above [35] and a polypropylene resin having the mass average molecular weight of 5,000 or more and 500,000 or less.
[37] A resin composition containing the composite particle as defined in the above [35] and a modified polyphenylene ether resin.

## EXAMPLES

Hereinafter, the present invention will be particularly described by showing Examples and the like, without intending to limit the scope of the present invention to the following Examples.

[Graft Density of Polymer Graft Chain on Surface of Composite Particles]

The graft density of the polymer graft chain on the surface of composite particles (chain/$nm^2$) was obtained by measuring a mass per unit area of the graft chain bound to the surface of the composite particles (g/$nm^2$) and a number average molecular weight of the graft chain (Mn) and according to the following formula:

Graft Density (chain/$nm^2$) = [Mass of Graft Chain per Unit Area (g/$nm^2$) / Number Average Molecular Weight of Graft Chain] $\times$ (Avogadro Number)

Here, a mass of a graft chain was obtained by Thermogravimetry (TG). More specifically, composite particles to be measured were heated from 40°C to 500°C by 10°C/minute in the atmosphere, and a weight loss rate at the time was measured. Further, "mass of graft chain per unit area" was calculated from the specific surface area of an inorganic particle which is a raw material of the composite particles to be measured.

A number average molecular weight of the graft chain was obtained by a gel permeation chromatography (GPC) shown below.

[Number Average Molecular Weight of Polymer Graft Chain in Composite Particles]

A number average molecular weight of a polymer chain which is not bound to composite particles generated concurrently in the step of producing the composite particles was measured as the number average molecular weight of a polymer graft chain.

The number average molecular weight was measured using TSKgel GMHHR-H+GMHHR-H (cation) for a column and chloroform for a solvent in a gel permeation chromatography (GPC), under conditions of a flow rate of 1.0 mL/minute and a column temperature of 40°C, and using a polystyrene as an equivalent molecular weight standard.

[Measurement of Specific Surface Area of Inorganic Particles and Method for Calculation of Total Surface Area]

A specific surface area of inorganic particles was measured according to a method of JIS Z 8833 (corresponding international standards: ISO 14488:2007).

In other words, regarding particle samples collected in accordance with JIS Z 8833, the specific surface area of the inorganic particles was calculated based on the adsorption isotherm according to so called the BET theory, using the amount of adsorbed gas [$cm^3$/g] obtained by the gas adsorption method in accordance with JIS Z 8830:2001 (corresponding international standard: ISO 9277:2010). In the present specification, a value obtained by a static volumetric method using BELSORP-mini II manufactured by BEL Japan Inc. was used.

The total of a surface area was calculated as a product of a mass of the used inorganic particles and a specific surface area of the inorganic particles.

[Glass Transition Temperature of Polymer Graft Chain in Composite Particles]

The glass transition temperature was measured according to a method of JIS K 7121.

In other words, the heat capacity was measured by heating composite particles from 40°C to 200°C at a rate of 10°C/minute with a differential scanning calorimeter DSC7020 manufactured by Hitachi High-Tech Science Corporation. The midpoint glass transition temperature Tmg,°C, in the DSC thermogram, was obtained as a temperature at an intersection point of a linear line in equidistance from a linear line extended from each baseline in a direction of the axis of ordinates, with a curve of the stepwise changing parts of the glass transition.

[Film Thickness of Polymer Graft Chain in Composite Particles]

A film thickness was calculated from the following formula.

As a polymer density in the formula, a polymer density of a polymer graft chain which is not bound to composite particles generated concurrently during a production of composite particles was considered as a polymer density of a polymer graft chain, and was measured by a pycnometer method in accordance with JIS K 7112.

Formula for film thickness

$$L = \frac{\sigma \times M_n}{d \times N_A \times 10^{-21}}$$

L: Film thickness (nm)

σ: Graft density (chains/$nm^2$)

d: Polymer density (g/$cm^3$)

$N_A$: Avogadro number

$M_n$: Number average molecular weight

[Angle of Repose of Composite Particles]

An angle of repose of composite particles was measured using Powder Tester (PT-R manufactured by Hosokawa Micron Corporation).

Synthetic Example 1

[Synthesis of Silane Compound Having a Polymerization Initiation Group Other Than Halosulfonyl Group]

To a 500 mL eggplant shaped flask were added 17.9 g of 3-aminopropyltrimethoxysilane (KBM-903, manufactured by Shin-Etsu Chemical Co., Ltd.), 100 mL of anhydrous tetrahydrofuran (THF), and 16.8 mL of anhydrous triethylamine (manufactured by Tokyo Chemical Industry Co., Ltd.). The mixture was cooled in an ice bath until the temperature reached 0°C, and 14.8 mL of 2-bromoisobutyryl bromide (BiBB) (manufactured by Tokyo Chemical Industry Co., Ltd.) was added dropwise to the mixture while keeping the mixture cooled in an ice bath and stirred for 4 hours. Later, a solvent was removed from a liquid phase obtained by filtration using an evaporator. The residue was dried at 50°C for 5 hours to obtain a silane compound having a bromoacyl group as the polymerization initiation group (the compound is hereafter abbreviated as "APTMS-Br"). The silane compound was used as a silane coupling agent.

The synthesis scheme of the aforementioned APTMS-Br is shown below.

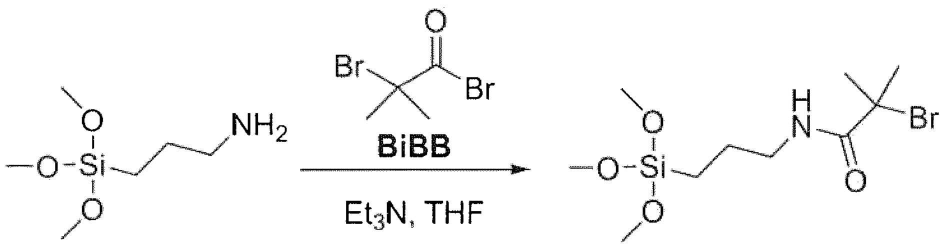


APTMS-Br

Example 1

[Step 1]

Fifty grams of silica fine particles (SO-C2, manufactured by Admatechs Co., Ltd.; average particle size: 500 nm, specific surface area: 5.5 $m^2$/g) and 0.23 g of anhydrous triethylamine as a catalyst were placed in a polyethylene bag and mixed by hand from outside the bag for 5 minutes at room temperature. To the mixture, 0.74 g of APTMS-Br was added and mixed by hand from outside the bag for 5 minutes. The mixture was mixed using a crush millser (manufactured by Iwatani Corporation) for 5 minutes at room temperature and then allowed to stand for 12 hours. The component which is liquid at 25°C under 1 atm in Step 1 was APTMS-Br and anhydrous triethylamine. As a result of visual observation of the procedure in Step 1, the system remained in a powder state throughout Step 1.

Later, the silica fine particles were washed with ethanol and then the silica fine particles were collected by centrifugation, and then heated at 110°C for 1 hour to obtain silica fine particles bound with a bromoacyl group which is a polymerization initiation group.

[Step 2]

To a 500 mL separable flask were added 6 g of the above-mentioned particles bound with a polymerization initiation group, 30 mL of anisole (manufactured by FUJIFILM Wako Pure Chemical Corporation), and 90 g of the monomer butyl methacrylate (manufactured by FUJIFILM Wako Pure Chemical Corporation). The mixture was heated to 80°C and stirred thoroughly, followed by nitrogen bubbling for 1 hour.

Separately, 431 mg of Cu(I)Br (manufactured by Tokyo Chemical Industry Co., Ltd.) and 1040 mg of pentamethyldiethylenetriamine (manufactured by Tokyo Chemical Industry Co., Ltd.) were stirred in 2 mL of anisole to prepare an anisole solution.

Next, the whole amount of the anisole solution was poured into the above-mentioned flask and a living radical polymerization was initiated. In other words, the solution was stirred at 80°C for 10 minutes.

Later, the solution was washed with methanol and silica fine particles grafted with polybutyl methacrylate were collected by centrifuge. The graft density of the surface of the obtained silica fine particles was 0.30 chains/$nm^2$ and the number average molecular weight of the graft chain was 33000.

Example 2

[Step 1]

Fifty grams of silica fine particles (SO-C2, manufactured by Admatechs Co., Ltd.; average particle size: 500 nm, specific surface area: *5.5* $m^2$/g) and 0.23 g of anhydrous triethylamine were placed in a polyethylene bag and mixed by hand from outside the bag for 5 minutes at room temperature. To the mixture, 0.74 g of APTMS-Br and 0.74 g of ethanol were added and mixed by hand from outside the bag for 5 minutes.

Subsequently, the same procedure as Example 1 was carried out to obtain silica fine particles bound with a polymerization initiation group. In the present Example, a trace amount of ethanol was added as a solvent; however, the system in Step 1 remained in a powder state.

[Step 2]

To a 500 mL separable flask were added 6 g of the above-mentioned particles bound with a polymerization initiation group, 30 mL of anisole (manufactured by FUJIFILM Wako Pure Chemical Corporation), and 90 g of the monomer butyl methacrylate (manufactured by FUJIFILM Wako Pure Chemical Corporation). The mixture was heated to 80°C and stirred thoroughly, followed by nitrogen bubbling for 1 hour.

Next, the whole amount of the anisole solution was poured into the above-mentioned flask and the same living radical polymerization as Example 1 was initiated, thereby obtaining silica fine particles having a graft chain of poly(methacrylic acid).

Example 3

Silica fine particles having a graft chain of poly(methacrylic acid) were obtained by the same method as Example 1 except that the silica fine particles were replaced with another silica fine particles (SO-C1, manufactured by Admatechs Co., Ltd.; average particle size: 200 nm, specific surface area: 17.0 $m^2$/g), and the amounts of a silane coupling agent and a catalyst were changed to the amounts described in Table 1. Since a solvent was not used in the present Example, the system in Step 1 remained in a powder state.

Example 4

Silica fine particles having a graft chain of poly(methacrylic acid) were obtained by the same method as Example 1 except that the silica fine particles were replaced with another silica fine particles (Aerosil 200, manufactured by Degussa AG; average particle size: 12 nm, specific surface area: 200 $m^2$/g), and the amounts of a silane coupling agent and a catalyst were changed to the amounts described in Table 1. Since a solvent was not used in the present Example, the system in Step 1 remained in a powder state.

Example 5

Silica fine particles having a graft chain of poly(methacrylic acid) were obtained by the same method as Example 2 except that the silane coupling agent was replaced with another silane coupling agent bound with a bromoacyl group as a polymerization-initiating group (3-(trimethoxysilyl)propyl 2-bromo-2-methylpropanoate, manufactured by Tokyo Chemical Industry Co., Ltd.; hereinafter abbreviated as "PTMS-Br"), and the amounts of a silane coupling agent and a catalyst were changed to the amounts described in Table 1. Since a solvent was not used in the present Example, the system in Step 1 remained in a powder state. The structure of PTMS-Br is shown below.

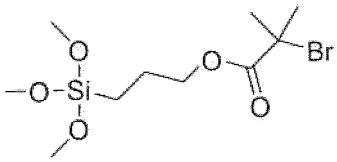

PTMS-Br

Example 6

Silica fine particles having a graft chain of poly(methacrylic acid) were obtained by the same method as Example 2 except that the used amount of ethanol was changed to the amount described in Table 1. In the present Example, a trace amount of ethanol was added as a solvent; however, the system in Step 1 remained in a powder state.

Example 7

Silica fine particles having a graft chain of poly(methacrylic acid) were obtained by the same method as Example 2 except that the silica fine particles were replaced with another silica fine particles (SO-C1, manufactured by Admatechs Co., Ltd.; average particle diameter, 200 nm; specific surface area, 17.0 $m^2/g$), and the amounts of a silane coupling agent and a catalyst were changed to the amounts described in Table 1, water was added in addition to ethanol as a solvent, and the amounts of a silane coupling agent and a catalyst was changed to the amounts described in Table 1. In the present Example, a trace amount of ethanol and water was added as a solvent; however, the system in Step 1 remained in a powder state.

Comparative Example 1

To a three-neck flask were placed 8.0 g of silica nanoparticles (Aerosil 200, manufactured by Degussa AG; average particle size: 12 nm, specific surface area: 200 $m^2/g$) and inside the flask was replaced with nitrogen. While stirring the silica nanoparticles, 3.6 g of 2-(4-chlorosulfonylphenyl)ethyltrimethoxysilane (hereinafter abbreviated as "Ts-Cl") was added dropwise thereto. After completion of dropwise addition, the mixture was stirred and reacted at 110°C for 24 hours. Subsequently, the flask was decompressed, and the unreacted substance was removed.

Later, the product was dried under reduced pressure at room temperature in a shade to obtain silica particles introduced with a chlorosulfonyl group which is a polymerization initiation group. In the present Comparative Example, which corresponds to Step 1 of the present invention, the state of the system during the step of obtaining inorganic particles bound with a polymerization initiation group was in a powder state. Incidentally, Ts-Cl is one of a silane coupling agent having a chlorosulfonyl group ($-SO_2Cl$) which is a halo-sulfonyl functional group.

To a three-neck flask were placed 2.0 g of silica particles to which a chlorosulfonyl group is introduced, 2.0 g of 4-vinylbenzyl chloride, 0.7 g of sparteine, and 0.1 g of copper(I) bromide, and inside the flask was replaced with nitrogen. While stirring, the mixture was reacted at 60°C for 24 hours.

Tetrahydrofuran was added to the reaction product, and the mixture was centrifuged to remove the supernatant. The obtained solid content was dried under reduced pressure to obtain silica particles having a graft chain of polyvinylbenzyl chloride.

Reference Example 1

Silica fine particles having a graft chain of poly(methacrylic acid) were obtained by the same method as Example 2 except that the amount of ethanol used as a solvent in Step 1 was changed to 200 g. Since a solvent was used in the present Reference Example, the state of the system in Step 1 was a liquid state.

Reference Example 2

Silica fine particles having a graft chain of poly(methacrylic acid) were obtained by the same method as Example 2 except that the amount of ethanol used as a solvent in Step 1 was changed to 21.6 g. Since a solvent was used in the present Reference Example, the state of the system in Step 1 was a slurry state. Therefore, the viscosity of the substances to be mixed was high, and a considerable amount of time was required to uniformly mix the substances to be mixed compared to Example 2.

Example 8

Silica fine particles having a graft chain of poly(methacrylic acid) were obtained by the same method as Example 1 except that the amount of a silane coupling agent was changed to the amount described in Table 3. Since a solvent was not used in the present Example, the state of the system in Step 1 was a powder state.

Example 9

Silica fine particles having a graft chain of poly(methacrylic acid) were obtained by the same method as Example 3 except that the amount of a silane coupling agent was changed to the amount described in Table 3. Since a solvent was not used in the present Example, the state of the system in Step 1 was a powder state.

Example 10

Silica fine particles having a graft chain of polystyrene were obtained by the same method as Example 6 except that a monomer was changed from butyl methacrylate to styrene (manufactured by FUJIFILM Wako Pure Chemical Corporation). In the present Example, a trace amount of ethanol was added as a solvent; however, the state of the system in Step 1 was a powder state.

Example 11

Silica fine particles having a graft chain of polystyrene were obtained by the same method as Example 10 except that a mixing device in Step 1 was changed from a crush millser to a super mixer (manufactured by KAWATA MFG. CO., LTD.). In the present Example, a trace amount of ethanol was added as a solvent; however, the state of the system in Step 1 was a powder state.

Example 12

Hollow silica having a graft chain of polystyrene were obtained by the same method as Example 1 except that silica particles were changed to a hollow silica (average particle size: 1,900 nm, specific surface area: 11.0 $m^2/g$), that a monomer was changed from butyl methacrylate to styrene (manufactured by FUJIFILM Wako Pure Chemical Corporation), and that the amount of silane coupling agent and the amount of catalyst were changed to the amounts described in Table 3. Since a solvent was not used in the present Example, the state of the system in Step 1 was a powder state.
The hollow silica used in Example 12 was produced as follows.
Ion exchanged water in the amount of 388.6 g, 200 g of dodecane (primary n-dodecane, manufactured by Kishida Chemical Co., Ltd.), and 11.4 g of Quartamin 86W (manufactured by Kao Corporation; containing 28 % by mass of stearyltrimethylammonium chloride) were mixed and stirred, to obtain emulsion A.
A reaction tank was charged with 13192.5 g of ion exchanged water, 138.1 g of emulsion A, 125.6 g of Quartamin 24P (manufactured by Kao Corporation; containing 27.5 % by mass of lauryltrimethylammonium chloride), and 3120.8 g of ethyl orthosilicate (TEOS 999, manufactured by Wacker Asahikasei Silicone Co., Ltd.), and the mixture was heated to 40°C while stirring. The mixture was then stirred for 10 minutes to obtain preparation liquid B.
Subsequently, 221.5 g of AH212-CS (manufactured by Yokkaichi Chemical Co,. Ltd.; containing 50 % by mass of dimethylbis(2-hydroxyethyl)ammonium hydroxide) and 711.6 g of Quartamin 24P were evenly mixed to obtain preparation liquid C. The whole amount of the preparation liquid C was added to the whole amount of the preparation liquid B at a constant speed, and then the mixture was stirred at 40°C for 3 hours to obtain a turbid liquid D.
The resulting turbid liquid D was then separated by filtration using 5C filter paper (manufactured by Advantec Toyo Kaisha, Ltd.), and washed with water, thereafter, the resulting turbid liquid D was dried at 110°C to obtain white hollow silica particle precursor. The resulting white hollow silica particle precursor was baked at 1100°C for 1 hour to obtain hollow silica.
The raw material used in each of the above examples and the results were summarized in the following Tables. Incidentally, all particles immediately after the termination of Step 1 in Examples 1 to 12 passed through a funnel (having a lower outlet diameter of 5 mm) without resistance.

[Table 1]

Table 1

| | | | | Example 1 | Example 2 | Example 3 | Example 4 | Example 5 | Example 6 | Example 7 |
|---|---|---|---|---|---|---|---|---|---|---|
| A | Inorganic particles | Kind of silica | | SO-C2 (500 nm) | | SO-C1 (200 nm) | Aerosil 200 (12 nm) | SO-C1 (200 nm) | SO-C2 (500 nm) | SO-C1 (200 nm) |
| | | Silica | (parts by mass) | 50 | | | | | | |
| | | Specific surface area | ($m^2/g$) | 5.5 | | 17.2 | 200 | 17.2 | 5.5 | 17.2 |
| | | Total surface area | ($m^2$) | 275 | | 850 | 10000 | 850 | 275 | 850 |
| B | Solvent | Ethanol | (parts by mass) | - | 0.74 | - | - | - | 2.47 | 1.11 |
| | | Dichloromethane | (parts by mass) | - | - | - | - | - | - | - |
| | | Water | (parts by mass) | - | - | - | - | - | - | 0.24 |
| | Silane coupling agent | Kind of coupling agent | | APTMS-Br | | | | PTMS-Br | APTMS-Br | |
| | | Amount | (parts by mass) | 0.74 | 0.74 | 2.35 | 17.1 | 2.36 | 0.74 | 0.94 |
| | Catalyst | Triethylamine | (parts by mass) | 0.23 | 0.23 | 0.72 | 5.41 | 0.72 | 0.23 | 0.29 |
| A/B | | | ($m^2/g$) | 284 | 161 | 277 | 444 | 276 | 79.9 | 329 |
| A'/B | | | (-) | 51.5 | 29.2 | 16.3 | 2.2 | 16.2 | 14.5 | 19.4 |
| Amount of silane coupling agent used* | | | (parts by mass) | 1.5 | 1.5 | 4.7 | 34.2 | 4.7 | 1.5 | 1.9 |
| State of the system in Step 1 | | | | powder state | powder state | powder state | powder state | powder state | powder state | powder state |
| Angle of repose** | | | (degree) | 43 | 44 | 52 | 49 | 52 | 49 | 54 |
| Graft density*** | | | (chains/$nm^2$) | 0.30 | 0.36 | 0.35 | 0.18 | 0.38 | 0.44 | 0.39 |

[Table 2]

Table 2

| | | | | Comp. Ex. 1 | Ref. Ex. 1 | Ref. Ex. 2 |
|---|---|---|---|---|---|---|
| A | Inorganic particles | Kind of silica | | Aerosil 200 (12 nm) | SO-C2 (500 nm) | |
| | | Silica | (parts by mass) | 50 | | |
| | | Specific surface area | ($m^2/g$) | 200 | 5.5 | 5.5 |
| | | Total surface area | ($m^2$) | 10000 | 275 | 275 |
| B | Solvent | Ethanol | (parts by mass) | - | 200 | 21.6 |
| | | Dichloromethane | (parts by mass) | 11.3 | - | - |
| | | Water | (parts by mass) | - | - | - |
| | Silane coupling agent | Kind of coupling agent | | Ts-Cl | APTMS-Br | |
| | | Amount | (parts by mass) | 11.3 | 0.74 | 0.74 |
| | Catalyst | Triethylamine | (parts by mass) | - | 7 | 0.23 |
| A/B | | | ($m^2/g$) | 442 | 1.32 | 12.2 |
| A'/B | | | (-) | 2.2 | 0.2 | 2.2 |
| Amount of silane coupling agent used* | | | (parts by mass) | 22.6 | 1.5 | 1.5 |
| State of the system in Step 1 | | | | powder state | liquid state | slurry state |
| Angle of repose** | | | (degree) | 50 | - | - |
| Graft density*** | | | (chains/$nm^2$) | 0.01 | 0.22 | 0.24 |

[Table 3]

Table 3

| | | | | Example 8 | Example 9 | Example 10 | Example 11 | Example 12 |
|---|---|---|---|---|---|---|---|---|
| A | Inorganic particles | Kind of silica | | SO-C2 (500 nm) | SO-C1 (200 nm) | SO-C2 (500 nm) | | Hollow silica (1900nm) |
| | | Silica | (parts by mass) | 50 | | | | |
| | | Specific surface area | ($m^2/g$) | 5.5 | 17.2 | 5.5 | | 11 |
| | | Total surface area | ($m^2$) | 275 | 850 | 275 | 275 | 550 |

(continued)

<table>
<tr><td colspan="4"></td><td>Example 8</td><td>Example 9</td><td>Example 10</td><td>Example 11</td><td>Example 12</td></tr>
<tr><td rowspan="6">B</td><td rowspan="3">Solvent</td><td>Ethanol</td><td>(parts by mass)</td><td>-</td><td>-</td><td colspan="2">2.47</td><td>-</td></tr>
<tr><td>Dichloromethane</td><td>(parts by mass)</td><td>-</td><td>-</td><td>-</td><td>-</td><td>-</td></tr>
<tr><td>Water</td><td>(parts by mass)</td><td>-</td><td>-</td><td>-</td><td>-</td><td>-</td></tr>
<tr><td rowspan="2">Silane coupling agent</td><td colspan="2">Kind of coupling agent</td><td colspan="5">APTMS-Br</td></tr>
<tr><td>Amount</td><td>(parts by mass)</td><td>1.48</td><td>3.29</td><td colspan="2">0.74</td><td>1.5</td></tr>
<tr><td>Catalyst</td><td>Triethylamine</td><td>(parts by mass)</td><td>0.23</td><td>0.72</td><td colspan="2">0.23</td><td>0.46</td></tr>
<tr><td colspan="3">A/B</td><td>($m^2/g$)</td><td>161</td><td>241</td><td>79.9</td><td>79.9</td><td>281</td></tr>
<tr><td colspan="3">A'/B</td><td>(-)</td><td>29.2</td><td>12.5</td><td>14.5</td><td>14.5</td><td>25.5</td></tr>
<tr><td colspan="3">Amount of silane coupling agent used*</td><td>(parts by mass)</td><td>3</td><td>6.6</td><td>1.5</td><td>1.5</td><td>3</td></tr>
<tr><td colspan="4">State of the system in Step 1</td><td>powder state</td><td>powder state</td><td>powder state</td><td>powder state</td><td>powder state</td></tr>
<tr><td colspan="3">Angle of repose**</td><td>(degree)</td><td>45</td><td>51</td><td>49</td><td>48</td><td>42</td></tr>
<tr><td colspan="3">Graft density***</td><td>($chains/nm^2$)</td><td>0.28</td><td>0.3</td><td>0.26</td><td>0.26</td><td>0.19</td></tr>
<tr><td colspan="9">* indicates the amount of silane coupling agent used (parts by mass) based on 100 parts by mass of inorganic particles.<br>** indicates the angle of repose of particles immediately after the termination of Step 1.<br>*** indicates the graft density ($chains/nm^2$) of the polymer graft chain on the surface of composite particles obtained.</td></tr>
</table>

Incidentally, all of ethanol, dichloromethane and water as a solvent, APTMS-Br, PTMS-Br and Ts-Cl as a silane coupling agent, and trimethylamine as a catalyst were components which were liquid at 1 atm.

In Comparative Example 1, composite particles were produced by using the same inorganic particles as in Example 4 except that a silane compound having a chlorosulfonyl group as a polymerization initiation group was used. The graft density of the polymer graft chain on the surface of composite particles obtained was 0.01 $chains/nm^2$. On the other hand, the graft density of the polymer graft chain on the surface of inorganic composite particles produced in Example 4 was 0.18 $chains/nm^2$. The result suggested that when a silane compound having a halosulfonyl group as a polymerization initiation group was used, the graft density of the polymer graft chain on the surface of inorganic composite particles obtained decreased. The reason for this is likely that the halosulfonyl group has a higher tendency to generate radicals, causing the polymerization reaction to proceed rapidly, consequently decreasing graft density.

When comparing Example 1 and Example 2, it was found that the graft density of the polymer graft chain on the surface of composite particles obtained was higher in Example 2. This is presumably because in Step 1, the presence of a good solvent for the silane coupling agent such as ethanol improved the dispersibility of the silane coupling agent.

When comparing Example 3 and Example 7, it was found that the graft density of the polymer graft chain on the surface of composite particles obtained was higher in Example 7 having less amount of silane coupling agent. This is presumably because in Step 1, the presence of water in addition to ethanol improved the reactivity of the silane coupling agent.

Reference Example 1 is an example showing that during the synthesis of inorganic particles bound with polymerization initiation group, ethanol as a medium was used in an amount exceeding the prescribed amount. When comparing Example 1 and Example 2 in which the same silica fine particles were used and Reference Example 1, it was found that the graft density of the polymer graft chain on the surface of inorganic composite particles produced was lower in Reference Example 1 as compared to Example 1 in which a medium was not used and Example 2 in which a medium was used in an amount within the prescribed amount.

Further, from Examples 10 to 11, it was found that composite particles having the polymer graft chain could be

produced even when using a monomer other than butyl methacrylate, for example a styrene.

INDUSTRIAL APPLICABILITY

The composite particle obtained by the method for production of the present invention can be used as a filler for a resin composition.

## Claims

1. A method for producing a composite particle having a polymer graft chain comprising;

    (Step 1) reacting an inorganic particle with a silane compound having a polymerization initiation group other than a halosulfonyl group to bind the polymerization initiation group to the inorganic particle, and
    (Step 2) subjecting a monomer to a graft polymerization in the presence of the inorganic particle bound with the polymerization initiation group,

    wherein Step 1 is carried out in a powder state.

2. The method for production according to claim 1, wherein a ratio of a total surface area of the inorganic particle (A [$m^2$]) to a total mass of a substance which is liquid at 25°C under 1 atm (B [g]) ( (A) / (B) [$m^2$ / g] ) is 20 or more, among the components used in Step 1.

3. The method for production according to claim 1 or 2, wherein a ratio of a total mass of the inorganic particle (A' [g]) to a total mass of a substance which is liquid at 25°C under 1 atm (B [g]) ( (A') / (B) ) is 2 or more, among the components used in Step 1.

4. The method for production according to any one of claims 1 to 3 comprising contacting the inorganic particle bound with the polymerization initiation group and the monomer, under a condition of a living radical polymerization.

5. The method for production according to any one of claims 1 to 4, wherein a graft density of the polymer graft chain on the surface of the composite particle is 0.001 chains/$nm^2$ or more and 5 chains/$nm^2$ or less.

6. The method for production according to any one of claims 1 to 5, wherein the used amount of the silane compound having the polymerization initiation group other than the halosulfonyl group is 0.1 parts by mass or more and 100 parts by mass or less, based on 100 parts by mass of the inorganic particle.

7. The method for production according to any one of claims 1 to 6, wherein the polymerization initiation group is an $\alpha$-haloacyl group, a haloalkyl group or a haloalkyl phenyl group.

8. The method for production according to any one of claims 1 to 7, further using one or more selected from the group consisting of ethanol, dichloromethane, toluene, acetone, tetrahydrofuran, methanol, butanol and butyl cellosolve in Step 1.

9. The method for production according to any one of claims 1 to 8, further using a catalyst in Step 1.

10. A method for producing a resin composition comprising mixing a composite particle obtained by a method for production as defined in any one of claims 1 to 9 and a resin.

11. A resin composition comprising

    a composite particle, and
    a resin,
    wherein the composite particle is obtained by a method for producing the composite particle having a polymer graft chain comprising;

        (Step 1) reacting an inorganic particle with a silane compound having a polymerization initiation group other than a halosulfonyl group to bind the polymerization initiation group to the inorganic particle, and

(Step 2) subjecting a monomer to a graft polymerization in the presence of the inorganic particle bound with the polymerization initiation group,

wherein Step 1 is carried out in a powder state.

## INTERNATIONAL SEARCH REPORT

International application No. **PCT/JP2024/030536**

**A. CLASSIFICATION OF SUBJECT MATTER**

***C08F 292/00***(2006.01)i; ***C08F 2/44***(2006.01)i
FI: C08F292/00; C08F2/44 A

According to International Patent Classification (IPC) or to both national classification and IPC

**B. FIELDS SEARCHED**

Minimum documentation searched (classification system followed by classification symbols)

C08F292/00; C08F2/44

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-196877 A (KAO CORPORATION) 10 December 2020 (2020-12-10) entire text | 1-10 |
| X | claims, examples | 11 |
| A | JP 2023-55252 A (FUJIFILM CORP.) 18 April 2023 (2023-04-18) entire text | 1-10 |
| X | claims, examples | 11 |
| A | WO 2022/104385 A1 (THE REGENTS OF THE UNIVERSITY OF COLORADO, A BODY CORPORATE) 19 May 2022 (2022-05-19) entire text | 1-11 |
| A | JP 2022-157406 A (INST NATIONAL COLLEGES TECH JAPAN) 14 October 2022 (2022-10-14) entire text | 1-11 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 October 2024** | **15 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/030536**

**C. DOCUMENTS CONSIDERED TO BE RELEVANT**

| Category* | Citation of document, with indication, where appropriate, of the relevant passages | Relevant to claim No. |
|---|---|---|
| A | JP 2022-41530 A (SHOWA DENKO MATERIALS CO., LTD.) 11 March 2022 (2022-03-11)<br>entire text | 1-11 |
| A | JP 2021-31551 A (SHOWA DENKO MATERIALS CO., LTD.) 01 March 2021 (2021-03-01)<br>entire text | 1-11 |
| A | JP 2020-94091 A (DIC CORPORATION) 18 June 2020 (2020-06-18)<br>entire text | 1-11 |
| A | JP 2017-42730 A (CANON KABUSHIKI KAISHA) 02 March 2017 (2017-03-02)<br>entire text | 1-11 |
| A | JP 2016-57105 A (JSR CORPORATION) 21 April 2016 (2016-04-21)<br>entire text | 1-11 |
| A | JP 2016-20822 A (SUMITOMO BAKELITE CO., LTD.) 04 February 2016 (2016-02-04)<br>entire text | 1-11 |
| A | JP 2017-532409 A (ADAMA MATERIALS, INC.) 02 November 2017 (2017-11-02)<br>entire text | 1-11 |
| A | JP 2014-43567 A (NATIONAL INSTITUTE FOR MATERIALS SCIENCE) 13 March 2014 (2014-03-13)<br>entire text | 1-11 |

Form PCT/ISA/210 (second sheet) (July 2022)

**INTERNATIONAL SEARCH REPORT**
**Information on patent family members**

International application No.
**PCT/JP2024/030536**

| Patent document cited in search report | Publication date (day/month/year) | Patent family member(s) | Publication date (day/month/year) |
|---|---|---|---|
| JP 2020-196877 A | 10 December 2020 | US 2022/0177633 A1<br>claims, examples<br>WO 2020/241755 A1<br>EP 3978567 A1<br>CN 113874436 A | |
| JP 2023-55252 A | 18 April 2023 | (Family: none) | |
| WO 2022/104385 A1 | 19 May 2022 | US 2024/0026333 A1<br>entire text<br>EP 4243975 A2<br>CA 3197584 A<br>AU 2021378842 A<br>CN 116569043 A<br>KR 10-2023-0107274 A<br>IL 302681 A<br>MX 2023005557 A<br>JP 2023-549607 A | |
| JP 2022-157406 A | 14 October 2022 | (Family: none) | |
| JP 2022-41530 A | 11 March 2022 | (Family: none) | |
| JP 2021-31551 A | 01 March 2021 | (Family: none) | |
| JP 2020-94091 A | 18 June 2020 | (Family: none) | |
| JP 2017-42730 A | 02 March 2017 | (Family: none) | |
| JP 2016-57105 A | 21 April 2016 | US 2016/0069870 A1<br>entire text | |
| JP 2016-20822 A | 04 February 2016 | (Family: none) | |
| JP 2017-532409 A | 02 November 2017 | US 2015/0344666 A1<br>entire text<br>WO 2015/184223 A1<br>EP 3149090 A1<br>AU 2015266813 A<br>CA 2950575 A1<br>BR 112016027967 A<br>IL 249279 A | |
| JP 2014-43567 A | 13 March 2014 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2025120365 A
- JP 2020196877 A
- JP 2010018535 A
- WO 2019065941 A